# EUROPEAN PATENT SPECIFICATION

(11) **EP 3 687 225 B1**
(45) Date of publication and mention of the grant of the patent: **27.10.2021**
(21) Application number: 19153772.9
(22) Date of filing: 25.01.2019
(51) Int. Cl.: H04W 48/18, H04W 36/14, H04W 48/06

(54) **INTER RAT CELL SELECTION OR RESELECTION**
INTER-RAT ZELLAUSWAHL ODER -WIEDERAUSWAHL
SELECTION OU RESELECTION DE CELLULE ENTRE TECHNOLOGIES D'ACCESS RADIO

(43) Date of publication of application: 29.07.2020
(73) Proprietor: FUJITSU LIMITED, Kanagawa 211-8588 (JP)
(72) Inventor: BUCKNELL, Paul, Peacehaven, East Sussex BN10 7AJ (GB); MOULSLEY, Timothy, Caterham, Surrey CR3 5EE (GB)
(74) Representative: Haseltine Lake Kempner LLP

(56) References cited:
- WO-A1-2015/183146
- WO-A1-2016/007050
- US-A1- 2016 037 388
- US-A1- 2018 092 007
- ZTE: "Further consideration on inter-RAT cell selection for NB-IoT", 3GPP DRAFT; R2-1817638 FURTHER CONSIDERATION ON INTER-RAT CELL SELECTION FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Spokane, United States; 20181112 - 20181116 12 November 2018 (2018-11-12), XP051557162, Retrieved from the Internet: URL:http://www.3gpp.org/ftp/Meetings%5F3GP P%5FSYNC/RAN2/Docs/R2%2D1817638%2Ezip [retrieved on 2018-11-12]
- ZTE: "Consideration on inter-RAT cell selection/reselection in NB-IoT", 3GPP DRAFT; R2-1814313 CONSIDERATION ON INTER-RAT CELL SELECTION-RESELECTION IN NB-IOT, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Chengdu, China; 20181008 - 20181012 28 September 2018 (2018-09-28), XP051523760, Retrieved from the Internet: URL:http://www.3gpp.org/ftp/tsg%5Fran/WG2% 5FRL2/TSGR2%5F103bis/Docs/R2%2D1814313%2Ez ip [retrieved on 2018-09-28]

## Description

### Field of the Invention

The present invention relates to a method in a wireless communication system.

The present invention further relates to a method in a terminal, the terminal and system themselves, and computer programs for carrying out said methods.

The present invention relates to techniques for assisting a terminal operating in one Radio Access Technology (RAT) to select a different-RAT serving cell.

### Background of the Invention

Wireless communication systems are widely known in which terminals (also called user equipments or UEs, subscriber or mobile stations) communicate with base stations (BSs) within range of the terminals.

The geographical areas served by one or more base stations are generally referred to as cells, and typically many BSs are provided in appropriate locations so as to form a system covering a wide geographical area more or less seamlessly with adjacent and/or overlapping cells. In general a given cell is also associated with a particular carrier frequency and a particular RAT, and a single system using a given RAT may comprise cells with different carrier frequencies. Each BS may support one or more cells (including cells formed by Remote Radio Heads (RRHs) which are linked to the BS via a fixed link such as a fibre optic cable). In each cell, the BS divides the available bandwidth for the cell, i.e. frequency and time resources, into individual resource allocations for the user equipments which it serves. The terminals are generally mobile and therefore may move among the cells, prompting a need for handovers between the base stations of adjacent cells. A terminal may be in range of (i.e. able to detect signals from and/or communicate with) several cells at the same time, but in the simplest case it communicates with one "serving" cell.

A Radio Access Technology, RAT, is an underlying physical connection method for a radio-based (wireless) communication system. One Radio Access Technology, RAT, or type of wireless system, is based upon the set of standards referred to as Long-Term Evolution, LTE or LTE-A (Advanced) for later versions including Carrier Aggregation. In the system topology in LTE (which is used here in general for LTE and LTE-A), each terminal, called a UE in LTE, connects wirelessly over an air interface (Uu) to a base station in the form of an enhanced node-B or eNB.

It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless system called the E-UTRAN (and henceforth generally referred to simply as "the system"). An LTE system can operate in a Time Division Duplex, TDD, mode in which the uplink and downlink are separated in time but use the same carrier frequency, or Frequency Division Duplex, FDD, in which the uplink and downlink occur simultaneously at different carrier frequencies. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB in turn is connected by a (usually) wired link (S1) to higher-level or "core network" entities, including a Serving Gateway (S-GW), and a Mobility Management Entity (MME) for managing the system and sending control signalling to other nodes, particularly eNBs, in the system. In addition a Packet Data Network (PDN) Gateway (P-GW) is present, separately or combined with the S-GW, to exchange data packets with any packet data network including the Internet. Thus, communication is possible between the LTE system and other systems. Meanwhile, the eNBs can communicate among themselves via a wired or wireless X2 interface.

Nowadays mobile access to the Internet or other communications networks is becoming a crucial necessity for both business and personal life and there are significant challenges to the current wireless systems due to the popularity of new applications such as social networking, cloud based services and big data analysis. With the forthcoming services such as Internet of things and ultra-reliable, mission-critical connections, a next-generation radio access system to succeed LTE/LTE-A and known as "5G" or "NR" (New Radio) is needed to satisfy all those demanding requirements. Work regarding 5G/NR is proceeding within various groups within 3GPP, the 3rd Generation Partnership Project previously responsible for devising the UMTS and LTE standards.

Incidentally, the above discussion by default refers to UEs operated by human users, for example in the form of mobile phones, laptop computers and PDAs or tablets. However, a wireless communication system may also be used for so-called Machine Type Communication (MTC) used in the Internet of Things (loT), where MTC is a form of data communication which involves one or more entities that do not necessarily need human interaction. Entities involved in MTC, henceforth referred to as MTC devices (or terminals), are also to be considered as a kind of UE except where the context demands otherwise. Applications of MTC devices include fleet management, smart metering, product tracking, home automation, e-health, etc. MTC or loT devices are often in fixed locations, in contrast to the mobile devices of human users.

As part of the physical layer design, the traditional concept of a base station which both schedules resources and houses the physical antennas for wireless communication with terminals (whether for human use or as part of the loT), becomes more fluid. Terminology used with respect to 5G/NR includes "gNB" (Next generation Node B), which manages (either locally or remotely) at least one transmission point. Such a transmission point may also serve as a reception point, and is typically referred to as a TRP or TRxP (Transmission/Reception Point).

In the 4G core network (CN), called the Evolved Packet Core (EPC), protocol and reference points (interfaces) are defined for each entity such as the Mobility Management Entity (MME), Serving Gateway (S-GW), and Packet Data Network Gateway (P-GW) as described above.

On the other hand, in the 5G core, protocol and reference points (interfaces) are defined for each Network Function (NF). An NF may be implemented either as a network element on a dedicated hardware, as a software instance running on a dedicated hardware, or as a virtualised function (not limited to specific hardware) instantiated on an appropriate platform, e.g., a cloud infrastructure.

In both NR and LTE/LTE-A, on the downlink, at the physical layer level (Layer 1 of the LTE and NR protocol layers), each cell conventionally broadcasts a number of channels and signals to all UEs within range, whether or not the UE is currently being served by that cell. These may be used for cell search and selection

Cell search and selection is a procedure undertaken by a User Equipment (UE) using a radio receiver to search for synchronisation signals from other cells in both time and frequency and thus detect the cell Identity (ID) of that cell. After synchronising to the detected cell, the UE is able to read the broadcast System Information (SI) from that cell. This SI enables other procedures to be undertaken such as transmitting a request to access the cell, for example using the RANDOM ACCESS Channel (RACH) procedure. Typically a UE will search for the best cell by measuring signal strength for many different candidate cells and then prioritising the cells by pre-defined criteria which have been previously configured by the system.

Once a UE has read SI and determined which cell, from the list of detected cells, it will eventually use for making the initial (RACH) access, the UE is said to be camping on that cell and will continue to read SI from only that cell. This is also referred to as the selected cell.

The base station typically transmits two types of signals to help the UE acquire cell synchronisation. These are the Primary Synchronisation Signal (PSS) and Secondary Synchronisation Signal (SSS). In LTE the PSS and SSS are transmitted in the centre 72 subcarriers in the first and sixth sub frame of each radio frame. In LTE there are three different PSS sequences and each cell transmits only one of them. Once the UE detects the correct PSS sequence it knows the slot timing and cell identity within a cell group (Three cell IDs). Then the UE correlates the same channel with 168 possible SSS sequences, thus when SSS is acquired the UE knows frame boundary and whether the cell uses a normal or extended cyclic prefix. The combination of the group (from PSS) and cell ID group number (0-167) from the SSS give the UE the Physical cell Identity (PCI). There are 168*3 or 504 unique PCIs. The PCI allows the UE to know the location of cell specific reference signals in the downlink subframes. These reference signals are used for channel estimation.

Once the UE has acquired time and frequency synchronisation for the broadcast downlink control channels it can start to read SI starting with the Master Information Block (MIB). The MIB contains DL channel bandwidth, system frame number and Physical channel hybrid ARQ (HARQ) configuration information. With this information the UE can then decode SIB1 and after this all the other SIBs being broadcast by the cell of the base station.

A UE can be in RRC-Idle-state (or Idle Mode) in which it is not known to the eNB, or in RRC Connected State in which it is connected to a cell for a call or data transfer, or camped on to a cell (it has completed the cell selection/reselection process and has chosen a cell). The UE monitors system information and (in most cases) paging information. Idle mode (and a corresponding camped-on/connected mode) is available in different RATs (Radio Access Technologies) which are types of technology used for radio access, for instance E-UTRA, UTRA, GSM, CDMA2000 1xEV-DO (HRPD) or CDMA2000 1x (1xRTT) or LTE or NB-loT or NR or WiMAX or Wi-Fi or WLAN. Invention embodiments may be used with all these RATs. Different RATs cooperating together may be seen as providing a Heterogeneous wireless network (HWN), and the different RATs may be provided by different operators. For a UE operating in Idle Mode in such cellular systems, there are defined procedures for cell connection that typically have to be performed. LTE is used as an example below.

### Cell selection/reselection in idle mode - LTE

When camped on a cell, the UE shall regularly search for a better cell according to the cell reselection criteria. If a better cell is found, that cell is selected. The change of cell may imply a change of RAT. Details on performance requirements for cell reselection can be found in Reference 2 [3GPP TS 36.133: "Requirements for Support of Radio Resource Management" (Release 15)] which is hereby incorporated by reference.

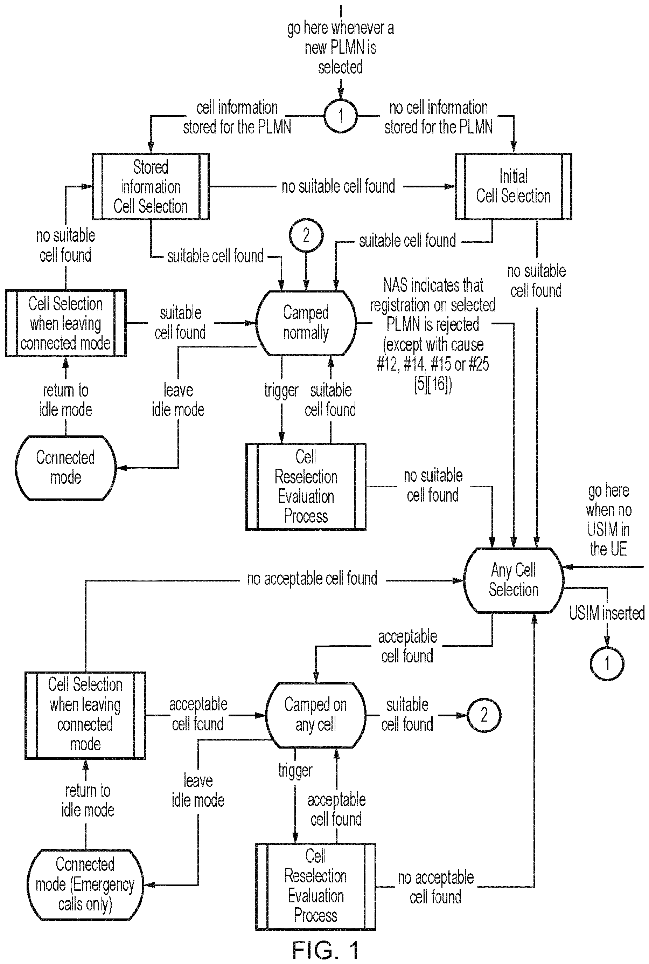

Cell selection and reselection procedures in LTE RRC-Idle-mode are defined in Reference 1 [3GPP TS 36.304 "User Equipment (UE) procedures in idle mode" (Release 15)] which is hereby incorporated by reference; and the flow chart that represents these procedures for other than NB-loT is reproduced in Figure 1 for clarity.

Figure 1 shows the typical cell selection/reselection flow for IDLE mode. All the states and state transitions and procedures in RRC_IDLE are shown. Whenever a new Public Land Mobile Network PLMN selection is performed, it causes an exit to number 1 shown at the top of the figure. Initially the UE is in idle mode. It then starts the cell selection process and camps on to a suitable cell. The UE then monitors system information and (in most cases) paging information. The cell reselection process takes place while the UE is camped on. It is triggered by UE internal triggers to meet performance (or when information on the Broadcast Control CHannel (BCCH) or Bandwidth Reduced Broadcast Control CHannel BR-BCCH used for the cell reselection evaluation procedure has been modified). If a new (better) suitable cell is found, the UE camps on to that cell. If not (or if there was no suitable cell available in the first place or a suitable cell is no longer available), the UE carries out AnyCellSelection to find an acceptable cell. If one is found the UE camps on to the cell and starts reselection. If no acceptable cell is found AnyCellSelection is re-started. Further description is available in Reference 1.

Current procedure for triggering of Inter-frequency and Inter-RAT cell search and measurements is as follows and based primarily on preset Absolute Priority which may range, for example from 0 to 7 (highest priority) and varies by RAT:
- The UE shall continuously search for inter-frequency and Inter-RAT cells of higher Absolute Priority (than the serving cell) at least every 60 x N Seconds where N = total number of E-UTRA, UTRA FDD, UTRA TDD, CDMA2000 1x and HRPD carrier frequencies that have a higher absolute priority (increased by one if one or more groups of GSM frequencies is configured as a higher priority)
- The UE shall search for inter-frequency cells of higher, equal and lower Absolute Priority, and search for IRAT cells of higher and lower Absolute priority when: serving cell Srxlev <= sNonlntraSearchP
- Where Srxlev is the Cell selection RX level value (dB) and sNonlntrasearchP specifies the Srxlev threshold (in dB) for E-UTRAN inter-frequency and inter-RAT measurements. It is thus is a threshold for measurements of inter-frequency of equal or lower priority than serving cell, and threshold for measurements of inter-RAT frequencies of lower priority than the serving cell
- Black lists can be used to prevent the UE from selecting or reselecting specific intra and inter-frequency cells

More details of the Layer1 (physical layer) measurement procedure are provided in Reference 1.

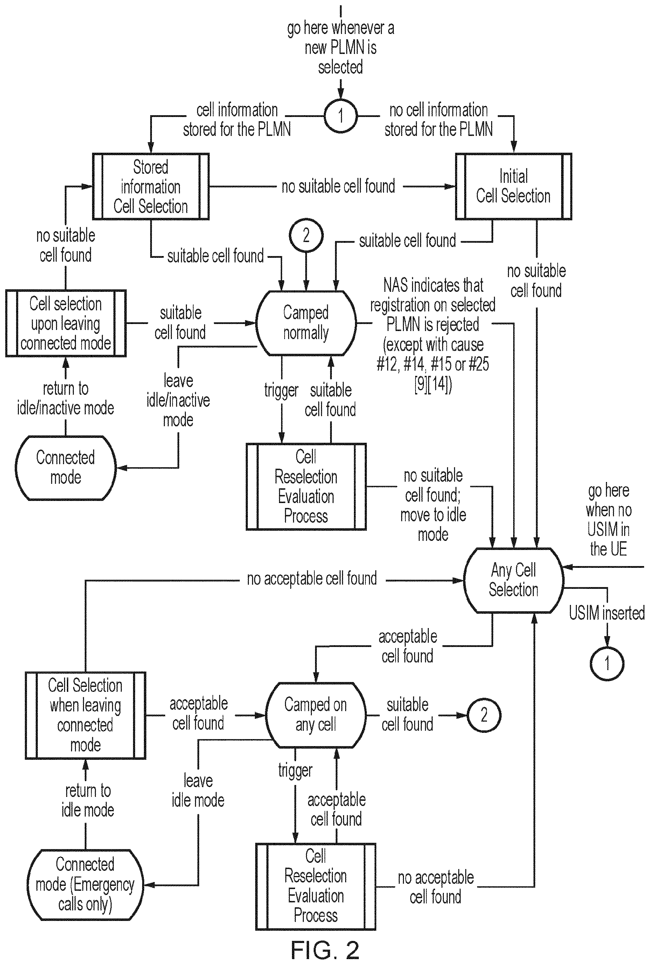

For NR the IDLE and RRC_INACTIVE mode procedure as shown in Figure 2 (from 3GPP TS 38.304 V15.1.0 (2018-09) is very similar to Figure 1 of the LTE RAT. The only refinement is the inclusion of RRC_INACTIVE mode, which is a suspended session in the connected state if there is no activity from the UE for a short time.

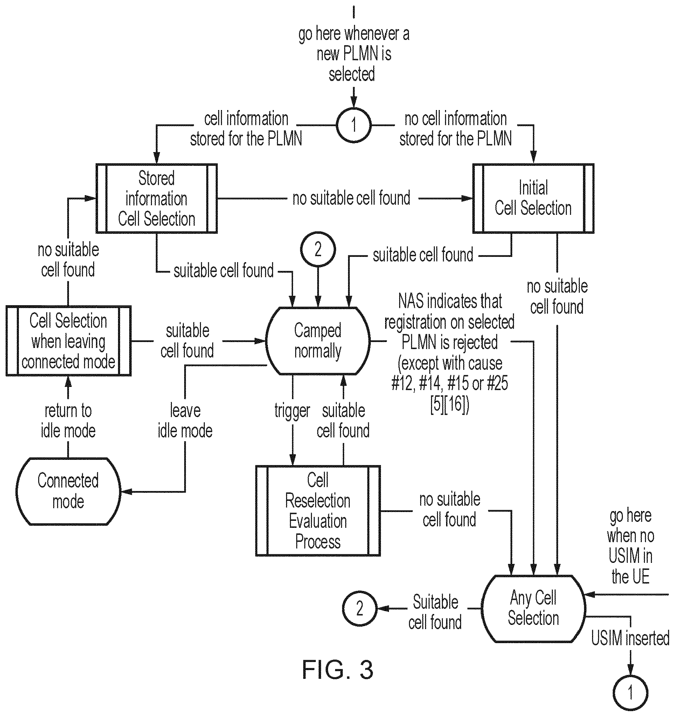

For NB-loT (NarrowBand loT) in LTE, Figure 3, also taken from Reference 1, shows the states and state transitions and procedures in RRC_IDLE. Whenever a new PLMN selection is performed, it causes an exit to number 1. Initially the UE is in idle mode. It then starts the cell selection process and camps on to a suitable cell. The UE then monitors system information and (in most cases) paging information. The cell reselection process takes place as before while the UE is camped on. If a new (better) suitable cell is found, the UE camps on to that cell. If not (or if there was no suitable cell available in the first place or a suitable cell is no longer available), the UE carries out AnyCellSelection to find an acceptable cell. If one is found the UE camps on to the cell and starts reselection. When a suitable cell is found, the UE camps on again normally. In NB-IoT, there is no provision for camping onto any (acceptable) cell (in contrast to the human-operated UE situation laid out in Figure 1). Acceptable cell functionality uses an "acceptable cell" that would not normally be selected, for emergency calls when a "suitable cell" is not available. This functionality is not required in NB-IoT.

As seen in Figure 3, cell selection usually refers to either initial cell selection or cell selection when leaving connected mode. Cell re-selection is normally used as the term to describe the process of receiving a trigger which makes the UE reevaluate the cell it is either connected to or camped on and then use a different "suitable" cell. Here, the term "suitable" is used to imply that the measured cell attributes satisfy the cell selection criteria. Typically the cell selection criteria are where the UE Non-Access Stratum (NAS) layer:
- Identifies a selected PLMN or equivalent PLMNs
- Ensures that the cell is not barred or reserved
- Checks that the cell is not part of a tracking area which is in the list of "forbidden tracking areas for roaming (see Reference 3 [3GPP TS 36:331: "Radio Resource Control (RRC); Protocol specification" (Release 15)].

Typically, cell reselection by the UE is based on received information (usually by cell broadcast in SI) and on such parameters as priority, threshold, offsets etc. If this information is not available then the "any cell" selection procedure applies.

The amount of information available to the UE will determine the exact triggers for the cell reselection procedure and/or cell selection. This information includes any information that the UE needs to be able to assess the suitability of a cell and if that cell is then of a higher priority than other cells. This priority of cells is sometimes referred to in the specifications as "cell ranking" and can allow the comparison of different cells in terms of their signal strength.

It is already known that the system can provide the UE with information about neighbouring cells (on the same or different RATs) to allow the UE to determine when to make an inter-RAT cell reselection or cell selection.

It is also known that in the current procedures a time-of-stay is defined to avoid too frequent cell reselection. This is sometimes referred to as the "ping pong" problem.

As described above, it is known that different priorities even for different RATS can be configured to the UE. This is important when the system wants to page a device and needs to ensure that all devices are on the same RAT to avoid costly paging being send on multiple RATS.

A mechanism for comparing the measurements on different cells belonging to different RATS which will have different bandwidths and therefore different absolute power measurement values is also known.

It is also known that the UE would only perform an inter-RAT cell reselection or cell selection if the UE supports the new RAT and camping on the currently selected RAT is not possible.

As generally inter-RAT cell reselection or cell selection is assumed to consume power (due to the many measurements that the UE has to make) then it is important that the procedure is as efficient as possible for the sake of reducing UE power consumption and therefore increasing the battery life of the battery power UE.

It is also known (see Reference 4 [R2-1814313 ZTE "Consideration on inter-RAT cell selection/reselection in NB-IoT"]) that inter-RAT reselection based on historical information is possible. In this procedure the UE does not perform cell measurements if the quality of the currently selected cell falls below a threshold of quality but instead selects a new best RAT cell based on previously stored historical information. The system can control the validity of the historical information stored in the UE by configuring a timer which could for example limit the amount of time that the UE can use only historical information before having to perform measurements on all available cells.

WO 2015/183146 A1 relates to methods for off-loading a first cell to a second cell where cell reselection priorities initially indicate a priority for the first cell that is higher than for the second cell.

US2018092007 describes a UE triggering the re-selection of a second/optimal RAT instead of a first RAT based on the comparison between the resources of the first and of the second RAT. Acquired system information may determine the choose of the optimal RAT.

Invention embodiments relate to the process in Figures 1 to 3 or similar processes in other RATs, specifically for the selection of cells using a different radio access technology (RAT) to the one the UE is currently either connected to or camped on. This functionality is also known as inter-RAT cell selection or reselection).

In the current cell selection/reselection mechanism defined in 3GPP specifications, the decision criteria are based on the "Best Cell" principle, in which the UE is allowed to camp on the best cell in terms of its own signal strength measurements of the neighbouring cells. There are procedures in place to distinguish the speed of mobility of UEs to avoid frequent re-selections, hence, unnecessary usage of the UE battery.

As per the current specifications, when a UE which is capable of operating on different RATs decides that it might switch RAT, it uses the cell selection procedure and will generally scan the whole bandwidth of the other RAT looking for a suitable inter-RAT cell to camp on. This procedure is time consuming and energy consuming, both problems which should be avoided in general and in particular for a low power loT type of device.

It is thus desirable to provide an alternative way of a terminal connecting to a different RAT.

### SUMMARY OF THE INVENTION

According to one embodiment of a first aspect of the invention there is provided a method for a wireless communications system. The wireless communication system comprises a terminal and base stations using a first Radio Access Technology, RAT. The base stations provide cells which can be selected to serve the terminal. The method comprises the terminal camping on to a selected cell of the wireless communication system using the first RAT; the base station providing the selected cell triggering the terminal to access a cell provided by a base station using a second RAT after the base station providing the selected cell receives a specified number of unsuccessful attempts to initiate access from the terminal using the first RAT; when the terminal has received the trigger, the terminal using previously stored system information, which enables it to send a message initiating access to the base station using the second RAT; and the terminal camping on to the cell of the second RAT.

This alternative cell selection (or re-selection) method allows some control of the base station in the start of method and may thus lower the burden on the terminal and/or shorten the signalling process. The cell selection/re-selection process is generally referred to as idle-mode, but the trigger may be sent while the terminal is still camped on or connected (or inactive in NR). Alternatively, the terminal may have re-entered idle mode. The terminal may be a MTC device, or any other type of terminal. The first RAT may be, for example, NB-loT in the LTE or NR standards and the second RAT may be any other RAT, such as GSM or CDMA or WiFi.

In the terminology used herein, a given set of base stations uses a first RAT, but the terminal(s) can attach to base stations of different RATs and thus effectively change to a new system.

The base station providing the selected cell (or selected base station) may trigger the terminal to access the second RAT in any suitable way using (known or new) signalling, or by an absence of (known or new) signalling. The trigger may originate from the first RAT or from the second RAT and be passed to the terminal via the first RAT. In one embodiment, the base station providing the selected cell triggers the terminal to access the base station using the second RAT by use of a control message, for example a control only paging message. This embodiment may use the paging channel PCH (which is not used in existing systems to convey any information about different RATs).

The trigger causes the terminal to refer to system information, which may then be used to camp on the second RAT cell directly or used in a further selection process.

When the terminal has received the trigger, the terminal uses previously stored system information. The stored information enables it to then send a message initiating access to the base station using the second RAT, without any intervening steps to retrieve more information. This message may be, for example, a Random Access Channel RACH message transmitting a terminal preamble on a random access channel. The second-RAT-using base station may respond with a Random Access Response (RAR). Any subsequent camping-on procedures which may be required are known to the skilled person.

The stored system information may have been provided to the terminal in any suitable way. In one embodiment, the terminal reads and stores system information of the base station using the second RAT. This may be by direct reception of broadcast transmissions from the base station using the second RAT.

Alternatively, the terminal may read and store system information of the base station using the second RAT via system signalling between the selected cell and the base station using the second RAT (and then signalling such as RRC signalling between the selected base station and the terminal).

If there is no pre-stored system information/configuration, or if the information is outdated, then after the terminal has received the trigger, the terminal may read system information from the base station using the second RAT.

The terminal may read and store system information of the base station using the second RAT, and when the base station using the first RAT does not respond to a specified number of attempts to transmit the message initiating access, the terminal may send an inter-RAT message (such as a Random Access message as mentioned above) initiating access to the base station using the second RAT using the stored system information. In this and other embodiments, the terminal may check validity of the system information before sending the message, for example to verify how recently the SI information was stored and potentially re-read the SI information.

The terminal may read and store system information of the base station using the second RAT directly from the base station using the second RAT or from the selected cell if it is available at the selected cell.

According to one embodiment of a second aspect of the invention there is provided a method in a terminal in a wireless communications system, the wireless communication system comprising the terminal and base stations using a first Radio Access Technology, RAT, providing cells which can be selected to serve the terminal, the method comprising: the terminal camping on to a selected cell of the wireless communication system using the first RAT; the terminal reading and storing system information of a base station using a second RAT; the terminal being triggered by the base station providing the selected cell to access a cell provided by the base station using the second RAT after the terminal makes a specified number of unsuccessful attempts to initiate access with the base station providing the selected cell using the first RAT; when the terminal has received the trigger, the terminal using previously stored system information, which enables it to send a message initiating access to the base station using the second RAT; and the terminal camping on the cell of the second RAT.

The method aspect in the terminal corresponds to the overall method in the system as described above and features of any of these method aspects can be applied to any of the other method aspects.

According to one embodiment of a third aspect of the invention there is provided a terminal in a wireless communications system, the wireless communication system comprising a terminal and base stations using a first Radio Access Technology, RAT, providing cells which can be selected to serve the terminal, the terminal comprising: a transmitter and a receiver arranged for communication; and a controller arranged to control a cell selection procedure using the transmitter and receiver; wherein the controller is arranged to camp on a selected cell of the wireless communication system using the first RAT; the controller is arranged to read and store system information of a base station using a second RAT; the controller is arranged to be triggered by the base station providing the selected cell to access a cell provided by the base station using the second RAT after the terminal makes a specified number of unsuccessful attempts to initiate access with the base station providing the selected cell using the first RAT; when the terminal has received the trigger, the terminal using the previously stored system information, which enables it to send a message initiating access to the base station (40) using the second RAT; and the controller is arranged to camp on the cell using the second RAT.

A wireless communications system according to a fourth aspect comprises a terminal and a base station according to the third aspect and a base station in a wireless communications system, the wireless communication system comprising a terminal and base stations using a first Radio Access Technology, RAT, providing cells which can be selected to serve the terminal, the base station comprising: a transmitter and a receiver arranged for communication; and a controller arranged to control communications of the transmitter and receiver; wherein the controller allows the terminal to camp on; and the controller triggers the terminal to access a base station providing a cell of a second RAT when the receiver receives a specified number of unsuccessful attempts to initiate access from the terminal using the first RAT.

The term "cell" used above is to be interpreted broadly, and may include, for example, the geographical area within the communication range of a transmission point or access point. As mentioned earlier, cells are normally provided by base stations. It is envisaged that the selected base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. Alternatively, the base stations may take an NR form and may therefore be described as a gNB. However, subject to the functional requirements of the invention, some or all base stations may take any other form suitable for transmitting and receiving signals from other stations.

The "terminal" referred to above may take the form of a user equipment (UE), subscriber station (SS), or a mobile station (MS), or any other suitable fixed-position or movable form. For the purpose of visualising the invention, it may be convenient to imagine the terminal as a mobile handset or loT device, however no limitation whatsoever is to be implied from this.

An apparatus/system according to preferred embodiments of the present invention can comprise any combination of the previous method aspects. Methods according to invention embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which, when executed by a processor comprised in a terminal and a processor comprised in base station, configures the terminal and base station to carry out the method steps according to any of the preceding method definitions or any combination thereof.

According to a further aspect there is provided a program which when loaded onto a wireless communications system configures a terminal and base station to carry out the method steps according to any of the preceding method definitions or any combination thereof.

In general the hardware mentioned may comprise the elements listed as being configured or arranged to provide the functions defined. For example this hardware may include a receiver, a transmitter (or a combined transceiver), a processor, memory/storage medium, a user interface and other hardware components generally found in a terminal.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites on the vehicle or in the back-end system and interconnected by a communication system.

Method steps of the invention can be performed by one or more programmable processors executing a computer program to perform functions of the invention by operating on input data and generating output data.

The invention is described in terms of particular embodiments. Other embodiments are within the scope of the following claims. For example, the steps of the invention can be performed in a different order and still achieve desirable results.

### Brief Description of the Drawings

Reference is made, by way of example only, to the accompanying drawings in which:
Figure 1 is a flow diagram illustrating cell selection/reselection in idle mode - LTE;
Figure 2 is a flow diagram illustrating RRC_IDLE and RRC_INACTIVE Cell Selection and Reselection for NR;
Figure 3 is a flow diagram illustrating RRC_IDLE Cell Selection and Reselection for NB-IoT;
Figure 4 is an overview diagram of two different-RAT systems, showing one cell of each system and a UE which can access either system;
Figure 5 is a flow diagram of a method in a communication system according to a an example which does not fall under the scope of the claims;
Figure 6 is a flow diagram of a method in a terminal according to an example which does not fall under the scope of the claims;
Figure 7 is a flow diagram of a method in a base station according an example which does not fall under the scope of the claims;
Figure 8 is a flow diagram illustrating paging to initiate inter RAT cell selection (ACCESS);
Figure 9 is a flow diagram illustrating paging to initiate inter RAT cell selection (Camping);
Figure 10 is a flow diagram illustrating stored parameter based inter-RAT RACH triggered by RACH failure;
Figure 11 is a flow diagram illustrating stored parameter based inter-RAT RACH triggered by RACH failure and including network signalling;
Figure 12 is a flow diagram illustrating RRC_INACTIVE Mode inter RAT cell selection; and
Figure 13 is a hardware diagram showing the structure of a terminal 10 or base station 20.

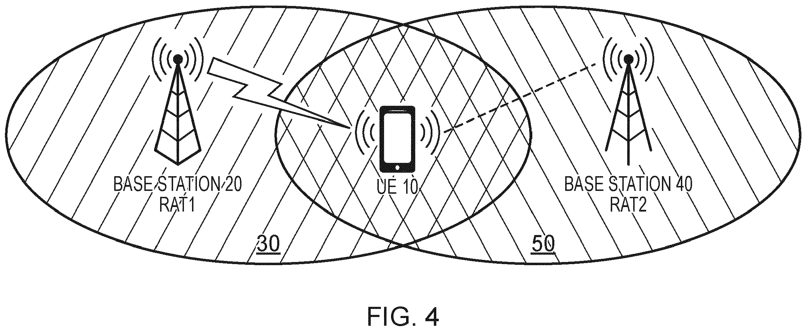

Figure 4 shows a UE 10 (such as an NB-IoT/MTC device) which can access cells provided by base stations of two different RATs. Base station 20 provides cell 30 of RAT1 and base station 40 provides cell 50 of RAT2. UE 10 is camped on to or connected to base station 20 of the first RAT and a dotted line shows a future connection to base station 40 of RAT2. UE 10 transfers from base station 20 to base station 40 using inter-RAT cell selection (including re-selection).

As part of the specification of the procedure for inter-RAT cell selection, one of the most important criteria is that UE power consumption is not negatively affected. Especially for devices using NB-loT the main use case for these devices is expected to be UEs or connected devices that are battery powered so any unnecessary increase in device power consumption would negatively impact battery life for the device. Generally for these types of devices bit rate is low and latency requirements are low as well. Handover is not required between the different RATs, the main purpose of using inter-RAT is so the device can still connect when there is no suitable NB-loT cell available. This could happen because the device moves out of NB-loT coverage or the coverage pattern around the device changes, for example, due to environmental changes such as new buildings or changes in network deployments.

One main improvement achieved by invention embodiments is to the procedure for inter-RAT cell selection made by increasing or even maximising the amount of information known to the UE and also by the system. The information may be from SI, which is the broadcast information available to all UEs in a cell, RRC signalling which is available only to a single specific UE in a cell, or potentially even multicast information available to a group of UEs in a cell. This may address the problems of allowing the UE to perform inter-RAT cell selection but with optimised (lower) power consumption and as quickly as possible.

Invention embodiments may also address the use case in which the system may wish to, for a single or group of devices, move from one RAT on to another for system load balancing gains or for system operational reasons.

Prior art inter-RAT measurement procedure may include some RACH circumvention mechanisms which may give complete freedom to the UE. Invention embodiments however may introduce system-controlled UE constraints to give the advantages of a more UE based inter-RAT cell selection mechanism but without the disadvantages of the system being unsure of the UE behaviour. In addition invention embodiments may introduce system signalled constraints that reduce power consumption of the device.

Accordingly, one benefit of invention embodiments may be power saving (autonomous transmission) whilst retaining system control over the autonomous transmissions for inter-RAT cell selection.

This has the benefit of reducing UE power consumption by removing unnecessary UE transmissions.

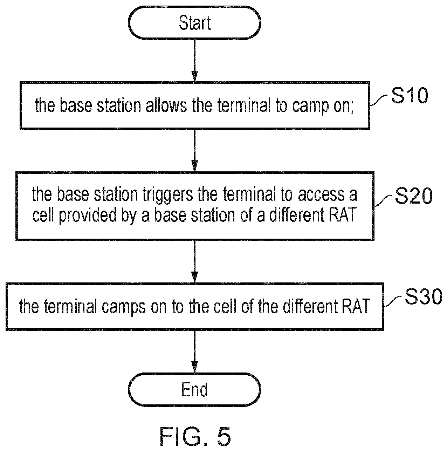

Figure 5 shows a method in a wireless communications system. The wireless communication system comprises a terminal and base stations of one Radio Access Technology, RAT, providing cells which can be selected to serve the terminal. In S10, the terminal camps on to a selected cell of the wireless communication system. The terminal may then remain camped on or subsequently return to idle mode or change to an NR inactive mode. This initial camping on step can allow the terminal to acquire SI from the selected cell and potentially also from one or more cells of a different RAT. In S20, the base station providing the selected cell triggers the terminal to access a cell provided by a base station of a different RAT. As previously set out, the trigger may be explicit signalling by the selected base station or lack of reception of expected signalling by the terminal. The lack of signalling may reflect a deliberate decision by the selected base station to trigger transfer to a different-RAT-using base station. In S30, the terminal camps onto the cell of the different-RAT-using base station. This may involve several signalling steps between the terminal and the new base station.

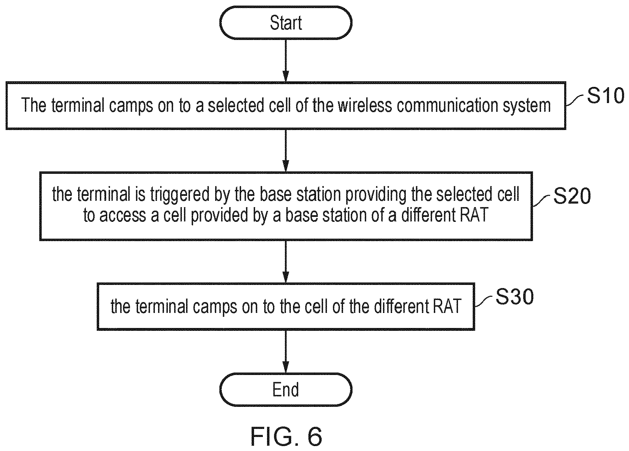

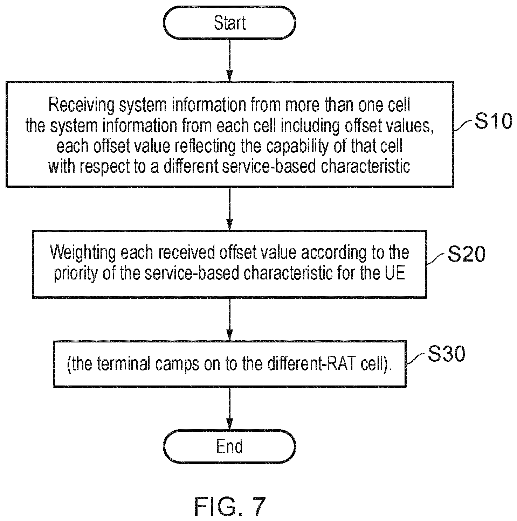

Figure 6 shows the same flow diagram from the point of view of the terminal and Figure 7 shows the same flow diagram from the point of view of the base station. Step S30 is shown in brackets in Figure 7, because it is not directly carried out by the base station of the first RAT. Further explanation of these flow diagrams is omitted here to avoid duplication.

### Embodiments

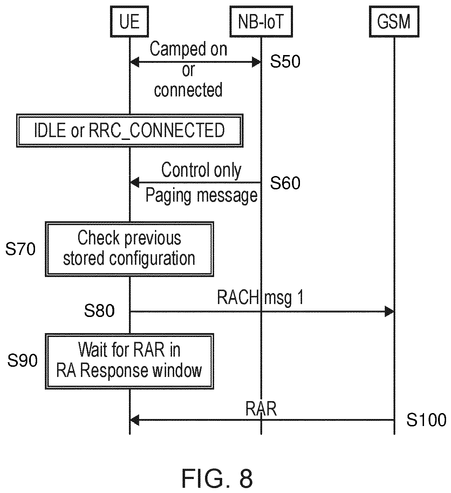

Figure 8 shows paging used to initiate inter-RAT cell selection. The figure exemplifies the case in which a device is camped on a NB-IoT cell and is sent a control only paging message (for example on the PCH paging channel, described in more detail below) which carries the trigger for the UE to start inter RAT access on a different RAT (GSM in this case). Implied in this diagram is that the UE already has enough stored information to perform a RACH to the GSM cell without having to obtain synchronisation first from that cell or perform signal strength measurements or obtain SI from that cell. If the UE has already enough information and it is still valid then this can potentially save many processing steps and transmitted radio messages, which will all help to reduce UE device power consumption, and in this case also speed up the connection time to the other RAT (GSM in this case).

The UE is initially camped on or connected using signalling shown as S50. It is in IDLE or RRC_CONNECTED mode when it receives a control-only paging message S60. In S70 the UE checks a stored configuration (such as SI for the GSM system cell(s)). In S80 the UE sends an access request such as RACH msg. 1. Then the UE waits for a response in the appropriate window S90. It receives the response in S100 and subsequently is able to camp on the GSM cell.

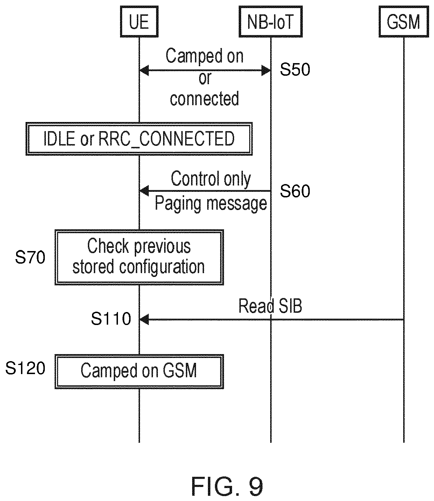

Figure 9 shows a similar scenario, with the signalling flow for the case similar to the Figure 8 (steps S50, S60 and S70 are identical to Figure 8). However, in this case the control only paging message is used to make the device read SI from the different-RAT-using cell in S110 to allow the cell's suitability to be determined for camping on. If the cell is suitable then the UE could camp on this inter-RAT cell in S120. Of course, in this and all embodiments, other conditions such as cell ranking could also play a part in the decision of the UE as to whether it camps on the inter-RAT cell (GSM in this case). In this case, the stored configuration is a previously received system configuration which has been stored by the UE.

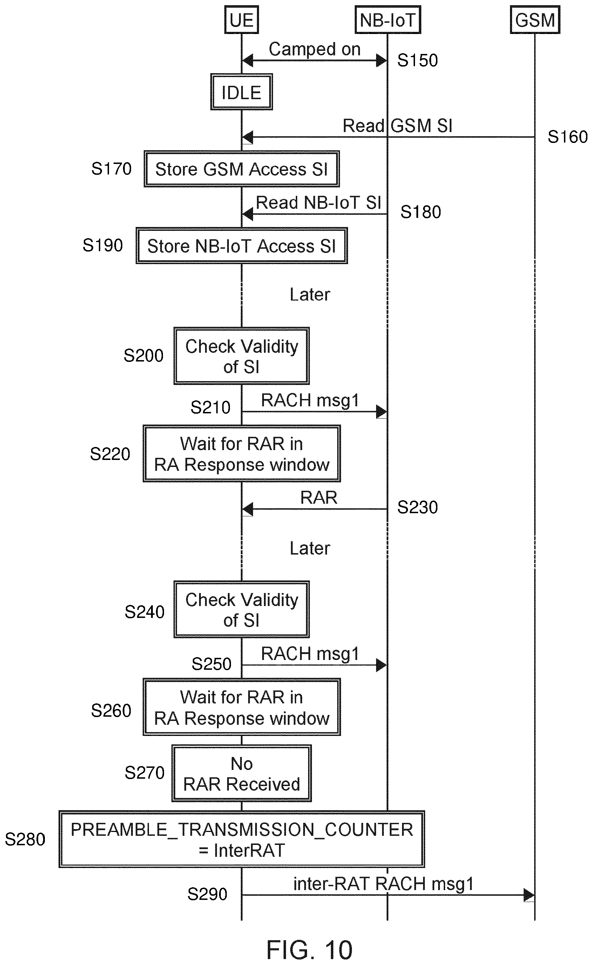

Figure 10 is a flow diagram for a case in which the selected base station triggers inter-RAT cell selection when it does not respond to a random access message. The base station might trigger inter-RAT cell selection rather than within the same RAT to use cell balancing and move UEs from one RAT to another, perhaps because of traffic overload on one of the RATs.

Figure 10 shows how a stored-parameter based inter-RAT RACH-triggered-by RACH-failure procedure for inter-RAT cell access might work.

In S150, the UE camps on to the NB-loT cell. Subsequently, the UE is IDLE. The UE reads the different RAT SI in S160 and stores it in S170. At this stage the UE also reads the NB-IoT SI in S180 and stores it in S190.

The embodiment shown demonstrates how the UE later checks SI validity of the NB-loT cell in S200 and then attempts and succeeds RACH to NB-loT in S210 and S220 and S230. At some subsequent point in time later the UE checks validity of SI of the NB-loT cell in S240 and then makes another RACH attempt, S250, S260, S270. After a number of unsuccessful attempts defined by RRC parameter PREAMBLE_TRANSMISSION_COUNTER in S280 (and shown here as 1), then the UE performs Inter-RAT RACH with stored parameters in S290. This stored parameter based inter-RAT RACH triggered by RACH failure can also be applied to inter RAT transfer from any RAT to any RAT where a different specific RRC parameter PREAMBLE_TRANSMISSION_COUNTER is defined for each RAT to be accessed.

One main advantage of this scheme is that the inter-RAT access is made without the delay caused by having to make inter-rat SI decoding after RACH failure.

Alternatively, the RACH failure could be used as a trigger to start inter-RAT measurements rather than a RACH attempt. This would speed up the obtaining of inter RAT SI if after a number of RACH failures then inter-RAT re-selection is needed. The resulting state after this would be that the UE is camped on the different/other RAT.

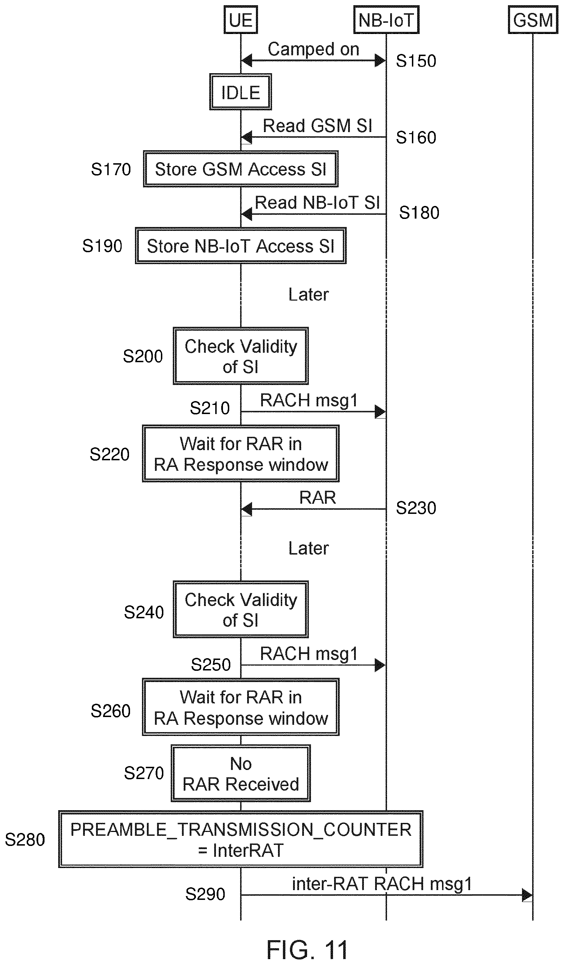

Figure 11 is identical to Figure 10, except that the UE reads the different RAT GSM SI in S160 by reading broadcast information from the NB-loT cell and stores this information for later use, rather than from the GSM cell itself. Then it can use NB-loT obtained stored SI for making RACH request to GSM if NB-loT access fails.

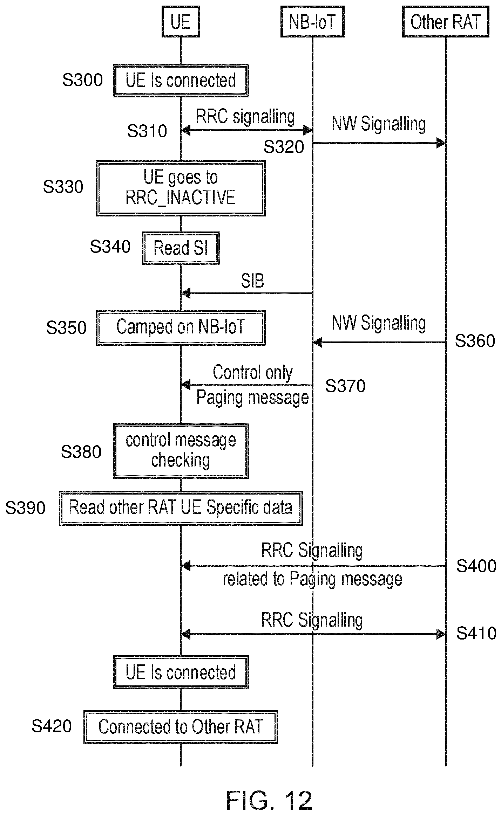

Figure 12 shows another embodiment of the inter-RAT procedure where NR RRC_INACTIVE Mode inter RAT cell selection is made. In this procedure there is system signalling present from one RAT (NB-IoT) to and from the second/ /other RAT which passes the parameters that allow the UE to directly receive RRC signalling from the different RAT without having to perform RACH signalling.

In more detail, The UE is connected in S300 and there is RRC signalling in S310 between the NB-loT cell and the UE. In S320 there is the system signalling from the current RAT NB-loT to the second/other (that is, different) RAT. In S330, the UE goes to inactive mode and in S340, the UE reads SI from the NB loT cell and then is camped on in S350. In S360 there is system signalling from the other RAT, passed on as a control only paging message in S370 from the current RAT cell to the UE. The UE checks the control message in S380 and reads other RAT UE specific data in S390. This is information sent on the Paging Channel (PCH).

A UE (or a group of UEs) can be paged to trigger an action in the UE. Such a paging message may contain a trigger to activate previously configured (i.e. in RRC Signalling) actions. New parameters in a paging message may be needed in order to run the above mentioned actions (e.g. a new UE action or an intended activation of a previously stored RRC configuration).

Typically in communication systems the paging channel (PCH) is a radio broadcast over the whole of the cell area. This is similar to the Broadcast Channel (BCH) which typically conveys important system information. The PCH typically is used to indicate the UE that there is incoming user data. In order to receive this data the UE has to set up a connection using a random access procedure. The UE has to monitor the PCH regularly in order that it does not miss any of the incoming connection requests. However, continuous monitoring of the PCH is not required because the PCH supports Discontinuous Reception (DRX) mode in which typically a particular UE only has to monitor at a certain time. In addition to the connection request, the PCH can carry other information, such as an indication that System Information (SI) has changed and that the UE is required to re-read SI on the BCH. Another example of a trigger carried by the PCH include Public Warning System (PWS) which indicates to the UE that the UE needs to read information from the Downlink Shared Channel (D-SCH).

S400 and S410 show RRC signalling related to the paging message and subsequent RRC signalling. This is the same procedure as shown in Figure 8 from S70, where instead of the stored configuration from S70 the configuration is read from the other RAT. In S420 the UE is connected to the other RAT.

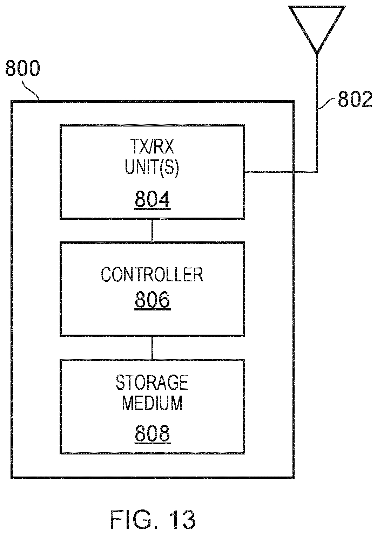

Figure 13 shows the hardware structure of a terminal 10 or base station 20 suitable for use with invention embodiments, including an antenna 802, transmission and reception unit(s) 804, a controller 806 and a storage medium or memory 808.

The elements specific to the terminal invention embodiments are the controller 806 and the receiver/transmitter 804. The receiver is shown here as transmitter/receiver unit 804 and can access more than one RAT. The controller 806 carries out cell selection and camps onto a base station of a different RAT after being triggered by the base station on which it is camped.

The terminal may include any type of device which may be used in a wireless communication system described above and may include loT devices, cellular (or cell) phones (including smartphones), personal digital assistants (PDAs) with mobile communication capabilities, laptops or computer systems with mobile communication components, and/or any device that is operable to communicate wirelessly. The terminal includes at least one transmitter/receiver unit 804 (each providing a receiver as mentioned above) connected to at least one antenna 802 and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including cell selection and re-selection. For example, the various functions described above may be embodied in the form of a computer program stored in the storage medium 808 and executed by the controller 806. The transmission/reception unit 804 is arranged, under control of the controller 806, to receive signals from cells of (at least) two different RATs. The storage medium 808 stores the values (such as SI values) required for cell selection and camping on.

The elements specific to the base station invention embodiments are the controller 806 and the transmitter/receiver 804. The receiver is shown here as transmitter/receiver unit 804 and can access more than one RAT. The controller 806 triggers the terminal to camp onto a base station of a different RAT.

The base station belongs to at least one RAT and may, for example, be described as an eNB (eNodeB) (which term also embraces Home eNB or HeNB) or take an NR form and be described as a gNB. Other/different base stations may take any other form of a different RAT as long as they are suitable for transmitting and receiving signals from other stations.

In any embodiment, the controller 806 may be, for example, a microprocessor, digital signal processor (DSP), application-specific integrated circuit (ASIC), field-programmable gate array (FPGA), or other logic circuitry programmed or otherwise configured to perform the various functions described above. For example, the various functions described above may be embodied in the form of a computer program stored in the storage medium 808 and executed by the controller 806.

Invention embodiments can provide new methods for the enhancement of the Inter-RAT IDLE mode cell selection procedures which are particularly suitable for loT devices where battery life is prioritised over latency. Embodiments use stored parameters and may use control only paging messages to reduce the amount of signalling (and therefore UE power) required for inter-RAT cell selection and reselection.

In one embodiment, a device controlled by one cell on one RAT is signalled to move to another RAT by the use of either a control-only paging message or by the use of system signalling to move to a different RAT.

Invention embodiments may provide improvements to the procedure for inter-RAT cell selection made by maximising the amount of information known to the UE and also by the system signalling to a UE to access a cell on another RAT. The amount of signalling between the UE and system may be minimised to reduce device power consumption. Embodiments may also address the use case in which the system may wish to, for a single device or for group of devices, move from one RAT on to another for system load balancing gains or for system operational reasons.

For convenience, the invention has been described with respect to specific cells. However, the invention can be applied without the necessity for cells, and may be described in terms of the communications between different stations (including base stations supporting cells, mobile stations (e.g. D2D), and other types of station such as relays, and to communication via Remote Radio Heads of base stations).

For convenience, the invention has been disclosed assuming one RAT per system. However the invention can be applied if one system supports multiple RATS.

The invention is equally applicable to FDD and TDD, and to mixed TDD/FDD implementations (i.e. not restricted to cells of the same FDD/TDD type). It is primarily described with reference to 3GPP systems. The principle can be applied to other communications systems. Accordingly, references in the claims to a "terminal" are intended to cover any kind of user device, subscriber station, mobile terminal, loT device and the like and are not restricted to the UE of 3GPP systems.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

## Claims

1. A method for a wireless communications system, the wireless communication system comprising a terminal (10) and base stations (20) using a first Radio Access Technology, RAT, providing cells (30) which can be selected to serve the terminal (10), the method comprising:
the terminal (10) camping on to a selected cell (30) provided by a base station (20) of the wireless communication system using the first RAT;
the base station (20) triggering the terminal (10) to access a cell (50) provided by another base station (40) using a second RAT after the base station (20) receives a specified number of unsuccessful attempts to initiate access from the terminal (10) using the first RAT;
when the terminal (10) has received the trigger, the terminal (10) using previously stored system information for sending a message for initiating access to the another base station (40) using the second RAT; and
the terminal (10) camping on to the cell (50) provided by the another base station (40) using the second RAT.

2. A method according to claim 1, wherein the base station (20) providing the selected cell (30) triggers the terminal (10) to access the another base station (40) using the second RAT using a control message, for example a control only paging message.

3. A method according to claim 1 or 2, wherein the terminal (10) reads and stores system information of the another base station (40) using the second RAT directly from the base station (40) using the second RAT.

4. A method according to claim 1 or 2, wherein the terminal (10) reads and stores system information of the another base station (40) using the second RAT via system signalling between the selected cell (30) and the another base station (40) using the second RAT.

5. A method according to any of the preceding claims, wherein after the terminal (10) has received the trigger, the terminal (10) reads system information from the another base station (40) using the second RAT.

6. A method according to claim 1, wherein the terminal (10) reads and stores system information of the another base station (40) using the second RAT, and wherein when the base station (20) using the first RAT does not respond to a specified number of attempts to transmit the message initiating access, the terminal (10) sends an inter-RAT message initiating access to the another base station (40) using the second RAT using the stored system information.

7. A method according to claim 1 or 6, wherein the terminal (10) reads and stores system information of the base station (40) using the second RAT directly from the another base station (40) using the second RAT or from the selected cell (30)

8. A method performed by a terminal (10) in a wireless communications system, the wireless communication system comprising the terminal (10) and base stations (20) using a first Radio Access Technology, RAT, providing cells (30) which can be selected to serve the terminal (10), the method comprising:
the terminal (10) camping on a selected cell (30) provided by a base station (20) of the wireless communication system using the first RAT;
the terminal (10) reading and storing system information of another base station (40) using a second RAT;
the terminal (10) being triggered by the base station (20) to access a cell (50) provided by the another base station (40) using the second RAT after the terminal (10) makes a specified number of unsuccessful attempts to initiate access with the base station (20);
when the terminal (10) has received the trigger, the terminal (10) using the previously stored system information for sending a message for initiating access to the another base station (40) using the second RAT; and
the terminal (10) camping on to the cell (50) provided by the another base station (40) using the second RAT.

9. A terminal (10; 800) of a wireless communications system, the wireless communication system comprising the terminal (10; 800) and base stations (20; 800) using a first Radio Access Technology, RAT, providing cells (30) which can be selected to serve the terminal (10; 800), the terminal (10; 800) comprising:
a transmitter (804) and a receiver (804) arranged for communication; and
a controller (806) arranged to control a cell selection procedure using the transmitter (804) and receiver (804); wherein
the controller (806) is arranged to camp on a selected cell (30) provided by a base station (20; 800) of the wireless communication system using the first RAT; and
the controller (806) is arranged to read and store system information of another base station (40) using a second RAT;
the controller (806) is arranged to be triggered by the base station (20; 800) to access a cell (50) provided by the another base station (40) using the second RAT after the terminal (10) makes a specified number of unsuccessful attempts to initiate access with the base station (20; 800) using the first RAT; and
the controller (806) is arranged, when triggered, to use the previously stored system information for sending message for initiating access to the another base station (40) using the second RAT; and
the controller (806) is arranged to camp on the cell (50) provided by the another base station (40) using the second RAT.

10. A wireless communications system comprising a terminal (10; 800) according to claim 9 and a base station (20; 800) using a first Radio Access Technology, RAT, providing cells (30) which can be selected to serve the terminal (10), the base station (20; 800) comprising:
a transmitter (804) and a receiver (804) arranged for communication; and
a controller (806) arranged to control communications of the transmitter (804) and receiver (804); wherein
the controller (806) is configured to enable the terminal (10; 800) to camp on a cell (30) provided by the base station (20; 800) using the first RAT; and
the controller (806) is configured to trigger the terminal (10; 800) to access another base station (40) providing a cell (50) of a second RAT when the receiver (804) receives a specified number of unsuccessful attempts to initiate access from the terminal (10; 800) using the first RAT.

11. A computer program which, when executed by a processor comprised in a terminal (10) and a processor comprised in a base station (20), causes the terminal (10) and the base station (20) to carry out the respective method steps of claim 1.

12. A computer program which, when executed by a processor comprised in a terminal (10; 800), causes the terminal (10; 800) to carry out the method steps of claim 8.

## Patentansprüche

1. Verfahren für ein drahtloses Kommunikationssystem, wobei das drahtlose Kommunikationssystem ein Endgerät (10) und Basisstationen (20) umfasst, die eine erste Funkzugangstechnologie, RAT, verwenden, die Zellen (30) bereitstellt, die ausgewählt werden können, um das Endgerät (10) zu bedienen, wobei das Verfahren umfasst:
das Endgerät (10) lagert auf einer ausgewählten Zelle (30), die von einer Basisstation (20) des drahtlosen Kommunikationssystems unter Verwendung der ersten RAT bereitgestellt wird;
die Basisstation (20) triggert das Endgerät (10), auf eine Zelle (50) zuzugreifen, die von einer anderen Basisstation (40), die eine zweite RAT verwendet, bereitgestellt wird, nachdem die Basisstation (20) eine spezifizierte Anzahl von erfolglosen Versuchen empfängt, den Zugriff von dem Endgerät (10) unter Verwendung der erste RAT zu initiieren;
wenn das Endgerät (10) den Trigger empfangen hat, verwendet das Endgerät (10) zuvor gespeicherte Systeminformationen zum Senden einer Nachricht für einen initiierenden Zugriff auf die andere Basisstation (40), die die zweite RAT verwendet; und
das Endgerät (10) lagert auf der von der anderen Basisstation (40), die die zweite RAT verwendet, bereitgestellten Zelle (50).

2. Verfahren nach Anspruch 1, wobei die Basisstation (20), die die ausgewählte Zelle (30) bereitstellt, das Endgerät (10) unter Verwendung einer Steuernachricht, beispielsweise einer Steuerelement-Paging-Nachricht, triggert, auf die andere Basisstation (40), die die zweite RAT verwendet, zuzugreifen.

3. Verfahren nach Anspruch 1 oder 2, wobei das Endgerät (10) Systeminformationen der anderen Basisstation (40), die die zweite RAT verwendet, direkt von der Basisstation (40), die die zweite RAT verwendet, liest und speichert.

4. Verfahren nach Anspruch 1 oder 2, wobei das Endgerät (10) Systeminformationen der anderen Basisstation (40), die die zweite RAT verwendet, über eine Systemsignalisierung zwischen der ausgewählten Zelle (30) und der anderen Basisstation (40), die die zweite RAT verwendet, liest und speichert.

5. Verfahren nach einem der vorhergehenden Ansprüche, wobei, nachdem das Endgerät (10) den Trigger empfangen hat, das Endgerät (10) Systeminformationen von der anderen Basisstation (40), die die zweite RAT verwendet, liest.

6. Verfahren nach Anspruch 1, wobei das Endgerät (10) Systeminformationen der anderen Basisstation (40), die die zweite RAT verwendet, liest und speichert, und wobei, wenn die Basisstation (20), die die erste RAT verwendet, nicht auf eine spezifizierte Anzahl von Versuchen, die zugriffsinitiierende Nachricht zu übertragen, antwortet, das Endgerät (10) unter Verwendung der gespeicherten Systeminformationen eine zugriffsinitiierende Inter-RAT-Nachricht an die andere Basisstation (40), die die zweite RAT verwendet, sendet.

7. Verfahren nach Anspruch 1 oder 6, wobei das Endgerät (10) Systeminformationen der Basisstation (40), die die zweite RAT verwendet, direkt von der anderen Basisstation (40), die die zweite RAT verwendet, oder von der ausgewählten Zelle (30) liest und speichert.

8. Verfahren, das von einem Endgerät (10) in einem drahtlosen Kommunikationssystem durchgeführt wird, wobei das drahtlose Kommunikationssystem das Endgerät (10) und Basisstationen (20) umfasst, die eine erste Funkzugangstechnologie, RAT, verwenden, die Zellen (30) bereitstellt, die ausgewählt werden können, um das Endgerät (10) zu bedienen, wobei das Verfahren umfasst:
das Endgerät (10) lagert auf einer ausgewählten Zelle (30), die von einer Basisstation (20) des drahtlosen Kommunikationssystems unter Verwendung der ersten RAT bereitgestellt wird;
das Endgerät (10) liest und speichert Systeminformationen einer anderen Basisstation (40), die eine zweite RAT verwendet;
das Endgerät (10) wird von der Basisstation (20) getriggert, auf eine Zelle (50) zuzugreifen, die von der anderen Basisstation (40), die die zweite RAT verwendet, bereitgestellt wird, nachdem das Endgerät (10) eine spezifizierte Anzahl von erfolglosen Versuchen unternommen hat, den Zugriff mit der Basisstation (20) zu initiieren;
wenn das Endgerät (10) den Trigger empfangen hat, verwendet das Endgerät (10) die zuvor gespeicherten Systeminformationen zum Senden einer Nachricht zum Initiieren des Zugriffs auf die andere Basisstation (40), die die zweite RAT verwendet; und
das Endgerät (10) lagert auf der von der anderen Basisstation (40), die die zweite RAT verwendet, bereitgestellten Zelle (50).

9. Endgerät (10; 800) eines drahtlosen Kommunikationssystems, wobei das drahtlose Kommunikationssystem das Endgerät (10; 800) und Basisstationen (20; 800) umfasst, die eine erste Funkzugangstechnologie, RAT, verwenden, die Zellen (30) bereitstellt, die ausgewählt werden können, um das Endgerät (10; 800) zu bedienen, wobei das Endgerät (10; 800) umfasst:
einen Sender (804) und einen Empfänger (804), die zur Kommunikation angeordnet sind; und
eine Steuerung (806), die dazu angeordnet ist, eine Zellenauswahlprozedur unter Verwendung des Senders (804) und des Empfängers (804) zu steuern; wobei
die Steuerung (806) dazu angeordnet ist, auf einer ausgewählten Zelle (30) zu lagern, die von einer Basisstation (20; 800) des drahtlosen Kommunikationssystems unter Verwendung der ersten RAT bereitgestellt wird; und
der Steuerung (806) dazu angeordnet ist, Systeminformationen einer anderen Basisstation (40), die eine zweite RAT verwendet, zu lesen und zu speichern;
die Steuerung (806) dazu angeordnet ist, von der Basisstation (20; 800) getriggert zu werden, auf eine Zelle (50) zuzugreifen, die von der anderen Basisstation (40), die die zweite RAT verwendet, bereitgestellt wird, nachdem das Endgerät (10) eine spezifizierte Anzahl von erfolglosen Versuchen unternommen hat, einen Zugang mit der Basisstation (20; 800), die die erste RAT verwendet, zu initiieren; und
die Steuerung (806) dazu angeordnet ist, wenn sie getriggert wird, die zuvor gespeicherten Systemsysteminformationen zum Senden einer Nachricht zum Initiieren des Zugriffs auf die andere Basisstation (40), die die zweiten RAT verwendet, zu verwenden; und
die Steuerung (806) dazu angeordnet ist, auf der von der anderen Basisstation (40), die die zweite RAT verwendet, bereitgestellten Zelle (50) zu lagern.

10. Drahtloses Kommunikationssystem, umfassend ein Endgerät (10; 800) nach Anspruch 9 und eine Basisstation (20; 800), die eine erste Funkzugangstechnologie, RAT, verwendet, die Zellen (30) bereitstellt, die ausgewählt werden können, um das Endgerät (10) zu bedienen, wobei die Basisstation (20; 800) umfasst:
einen Sender (804) und einen Empfänger (804), die zur Kommunikation angeordnet sind; und
eine Steuerung (806), die dazu angeordnet ist, die Kommunikationen des Senders (804) und des Empfängers (804) zu steuern; wobei
die Steuerung (806) dazu ausgelegt ist, dem Endgerät (10; 800) zu ermöglichen, auf einer Zelle (30) zu lagern, die von der Basisstation (20; 800) bereitgestellt wird, die die erste RAT verwendet; und
die Steuerung (806) dazu ausgelegt ist, das Endgerät (10; 800) zu triggern, auf eine andere Basisstation (40) zuzugreifen, die eine Zelle (50) einer zweiten RAT bereitstellt, wenn der Empfänger (804) eine spezifizierte Anzahl von erfolglosen Versuchen empfängt, den Zugriff von dem Endgerät (10; 800) unter Verwendung der ersten RAT zu initiieren.

11. Computerprogramm, das bei Ausführung durch einen in einem Endgerät (10) enthaltenen Prozessor und einen in einer Basisstation (20) enthaltenen Prozessor bewirkt, dass das Endgerät (10) und die Basisstation (20) die jeweiligen Verfahrensschritte nach Anspruch 1 ausführen.

12. Computerprogramm, das, wenn es von einem in einem Endgerät (10; 800) enthaltenen Prozessor ausgeführt wird, bewirkt, dass das Endgerät (10; 800) die Verfahrensschritte nach Anspruch 8 ausführt.

## Revendications

1. Un procédé pour un système de communication sans fil, le système de communication sans fil comprenant un terminal (10) et des stations de base (20) utilisant une première technologie d'accès radio, RAT, fournissant des cellules (30) qui peuvent être sélectionnées pour desservir le terminal (10), le procédé comprenant :
le terminal (10) se met en attente sur une cellule sélectionnée (30) fournie par une station de base (20) du système de communication sans fil utilisant la première RAT ;
la station de base (20) déclenchant le terminal (10) pour accéder à une cellule (50) fournie par une autre station de base (40) utilisant une deuxième RAT après que la station de base (20) ait reçu un nombre spécifié de tentatives infructueuses pour initier l'accès depuis le terminal (10) utilisant la première RAT ;
lorsque le terminal (10) a reçu le déclencheur, le terminal (10) utilise des informations système précédemment stockées pour envoyer un message pour initier l'accès à l'autre station de base (40) utilisant la deuxième RAT ; et
le terminal (10) se met en attente sur la cellule (50) fournie par l'autre station de base (40) utilisant la deuxième RAT.

2. Un procédé selon la revendication 1, dans lequel la station de base (20) fournissant la cellule sélectionnée (30) déclenche le terminal (10) pour accéder à l'autre station de base (40) utilisant la deuxième RAT en utilisant un message de commande, par exemple un message de radiomessagerie de commande uniquement.

3. Un procédé selon la revendication 1 ou 2, dans lequel le terminal (10) lit et stocke des informations système de l'autre station de base (40) utilisant la deuxième RAT directement depuis la station de base (40) utilisant la deuxième RAT.

4. Un procédé selon la revendication 1 ou 2, dans lequel le terminal (10) lit et stocke des informations système de l'autre station de base (40) utilisant la deuxième RAT via une signalisation de système entre la cellule sélectionnée (30) et l'autre station de base (40) utilisant la deuxième RAT.

5. Un procédé selon l'une quelconque des revendications précédentes, dans lequel après que le terminal (10) a reçu le déclencheur, le terminal (10) lit des informations système depuis l'autre station de base (40) utilisant la deuxième RAT.

6. Un procédé selon la revendication 1, dans lequel le terminal (10) lit et stocke des informations système de l'autre station de base (40) utilisant la deuxième RAT, et dans lequel
lorsque la station de base (20) utilisant la première RAT ne répond pas à un nombre spécifié de tentatives de transmission du message initiant l'accès, le terminal (10) envoie un message inter-RAT initiant l'accès à l'autre station de base (40) utilisant la deuxième RAT en utilisant les informations système stockées.

7. Un procédé selon la revendication 1 ou 6, dans lequel le terminal (10) lit et stocke des informations système de la station de base (40) utilisant la deuxième RAT directement depuis l'autre station de base (40) utilisant la deuxième RAT ou depuis la cellule sélectionnée (30).

8. Un procédé exécuté par un terminal (10) dans un système de communication sans fil, le système de communication sans fil comprenant le terminal (10) et des stations de base (20) utilisant une première technologie d'accès radio, RAT, fournissant des cellules (30) qui peuvent être sélectionnées pour desservir le terminal (10), le procédé comprenant :
le terminal (10) se met en attente sur une cellule sélectionnée (30) fournie par une station de base (20) du système de communication sans fil utilisant la première RAT ;
le terminal (10) lisant et stockant des informations système d'une autre station de base (40) utilisant une deuxième RAT ;
le terminal (10) étant déclenché par la station de base (20) pour accéder à une cellule (50) fournie par l'autre station de base (40) utilisant la deuxième RAT après que le terminal (10) ait effectué un nombre spécifié de tentatives infructueuses pour initier l'accès avec la station de base (20) ;
lorsque le terminal (10) a reçu le déclencheur, le terminal (10) utilise des informations système précédemment stockées pour envoyer un message pour initier l'accès à l'autre station de base (40) utilisant la deuxième RAT ; et
le terminal (10) se met en attente sur la cellule (50) fournie par l'autre station de base (40) utilisant la deuxième RAT.

9. Un terminal (10 ; 800) d'un système de communication sans fil, le système de communication sans fil comprenant le terminal (10 ; 800) et des stations de base (20 ; 800) utilisant une première technologie d'accès radio, RAT, fournissant des cellules (30) qui peuvent être sélectionnées pour desservir le terminal (10 ; 800), le terminal (10 ; 800) comprenant :
un émetteur (804) et un récepteur (804) agencés pour la communication ; et
un contrôleur (806) agencé pour commander une procédure de sélection de cellule en utilisant l'émetteur (804) et le récepteur (804) ; dans lequel le contrôleur (806) est agencé pour se mettre en attente sur une cellule sélectionnée (30) fournie par une station de base (20 ; 800) du système de communication sans fil utilisant la première RAT ; et
le contrôleur (806) est agencé pour lire et stocker des informations système d'une autre station de base (40) utilisant une deuxième RAT ;
le contrôleur (806) est agencé pour être déclenché par la station de base (20 ; 800) pour accéder à une cellule (50) fournie par l'autre station de base (40) utilisant la deuxième RAT après que le terminal (10) a effectué un nombre spécifié de tentatives infructueuses pour initier l'accès avec la station de base (20 ; 800) utilisant la première RAT ; et
le contrôleur (806) est agencé, lorsqu'il est déclenché, pour utiliser les informations système précédemment stockées pour envoyer un message pour initier l'accès à l'autre station de base (40) utilisant la deuxième RAT ; et
le contrôleur (806) est agencé pour se mettre en attente sur la cellule (50) fournie par l'autre station de base (40) utilisant la deuxième RAT.

10. Un système de communication sans fil comprenant un terminal (10 ; 800) selon la revendication 9 et une station de base (20 ; 800) utilisant une première technologie d'accès radio, RAT, fournissant des cellules (30) qui peuvent être sélectionnées pour desservir le terminal (10), la station de base (20 ; 800) comprenant :
un émetteur (804) et un récepteur (804) agencés pour la communication ; et
un contrôleur (806) agencé pour commander les communications de l'émetteur (804) et du récepteur (804) ; dans lequel
le contrôleur (806) est configuré pour permettre au terminal (10 ; 800) de se mettre en attente sur une cellule (30) fournie par la station de base (20 ; 800) utilisant la première RAT ; et
le contrôleur (806) est configuré pour déclencher le terminal (10 ; 800) pour accéder à une autre station de base (40) fournissant une cellule (50) d'une deuxième RAT lorsque le récepteur (804) reçoit un nombre spécifié de tentatives infructueuses pour initier l'accès depuis le terminal (10 ; 800) utilisant la première RAT.

11. Un programme informatique qui, lorsqu'il est exécuté par un processeur compris dans un terminal (10) et un processeur compris dans une station de base (20), amène le terminal (10) et la station de base (20) à exécuter les étapes respectives du procédé selon la revendication 1.

12. Un programme informatique qui, lorsqu'il est exécuté par un processeur compris dans un terminal (10 ; 800), amène le terminal (10 ; 800) à exécuter les étapes du procédé selon la revendication 8.
